## Europäisches Patentamt

## European Patent Office

## Office européen des brevets

(11) Publication number: **0 256 179**
**B1**

## EUROPEAN PATENT SPECIFICATION

(45) Date of publication of the patent specification:
**17.10.90**

(21) Application number: **86306197.4**

(22) Date of filing: **11.08.86**

(51) Int. Cl.⁵: **F16L 37/08**

(54) Pipe fitting assembly.

(43) Date of publication of application:
**24.02.88 Bulletin 88/8**

(45) Publication of the grant of the patent:
**17.10.90 Bulletin 90/42**

(84) Designated Contracting States:
**BE DE FR IT NL SE**

(56) References cited:
**EP-A- 0 031 409**
**EP-A- 0 059 877**
**EP-A- 0 132 673**
**DE-A- 3 235 058**
**US-A- 4 123 091**

(73) Proprietor: **BENDIX LIMITED, Douglas Road,
Kingswood, Bristol BS15 2NL(GB)**

(72) Inventor: **Oliver, Patrick R., 84 Pearsall Road, Longwell
Green Bristol BS15 6BE(GB)**

(74) Representative: **Turner, Alan Reginald, c/o Bendix
Limited Douglas Road, Kingswood, Bristol
BS15 2NL(GB)**

ACTORUM AG

## Description

This invention relates to pipe-fitting assemblies specifically of a quick fit type whereby a flexible pipe fluid pressure connection can be instantly and simply made but which is nevertheless readily dismantled for subsequent servicing or replacement.

In vehicle compressed air bracking systems a number of connections are made via flexible nylon, plastics or synthetic rubber pressure pipes and it is desirable that connections of such pipes may be reliably strongly and rapidly made on a vehicle assembly line and yet be subsequently releaseable for component servicing or replacement.

In European Patent Specification No. 0 132 673 several arrangements of pipe fitting assemblies are illustrated and described which comprise two main parts a first of which is sealingly located in a body with which a flexible pipe connection is required to be made and the second of which is adapted to receive a flexible pipe and is axially insertable in the first part. The first part also serves to locate a generally annular insert which carries resilient abutments which serve to lockingly engage the second part when it is manually inserted in the first part.

The present invention seeks to provide such a push-in pipe fitting assembly with improved means whereby whilst it permits relative rotation of the two main parts also permits non destructive axial separation when required.

According to the present invention there is provided a pipe fitting assembly comprising a first part having an aperture receiving a second part for effecting a pipe connection therewith said first part having an insert through which an inner end of the second part can pass said insert having means axially locating it in the aperture and also having first abutment means engageable with second abutment means of the second part in a sense to constrain the second part against withdrawal thereof from the first part and characterised by means operable by rotation of the insert relative to the second part to disengage said abutment means and permit withdrawal of the second part from the first part.

In a preferred arrangement the rotatable insert may have one or more resiliently radially outwardly deflectable abutment or abutments engageable in corresponding notches of the second part rotation of the insert being effective to cause each such abutment to ride out of the respective notches.

Preferably, an outer sleeve or other such means are provided for rotationally locating the insert relative to the second part.

In order that the invention may be more clearly understood and readily carried into effect, it will now be further described by way of an example with reference to the accompanying drawing of which:

Fig. 1 illustrates a diagrammatic sectional view through a pipe fitting assembly,

Fig. 2 illustrates on enlarged scale an inner or second part of the assembly and,

Fig. 3 illustrates on the same enlarged scale a rotatable insert of the assembly.

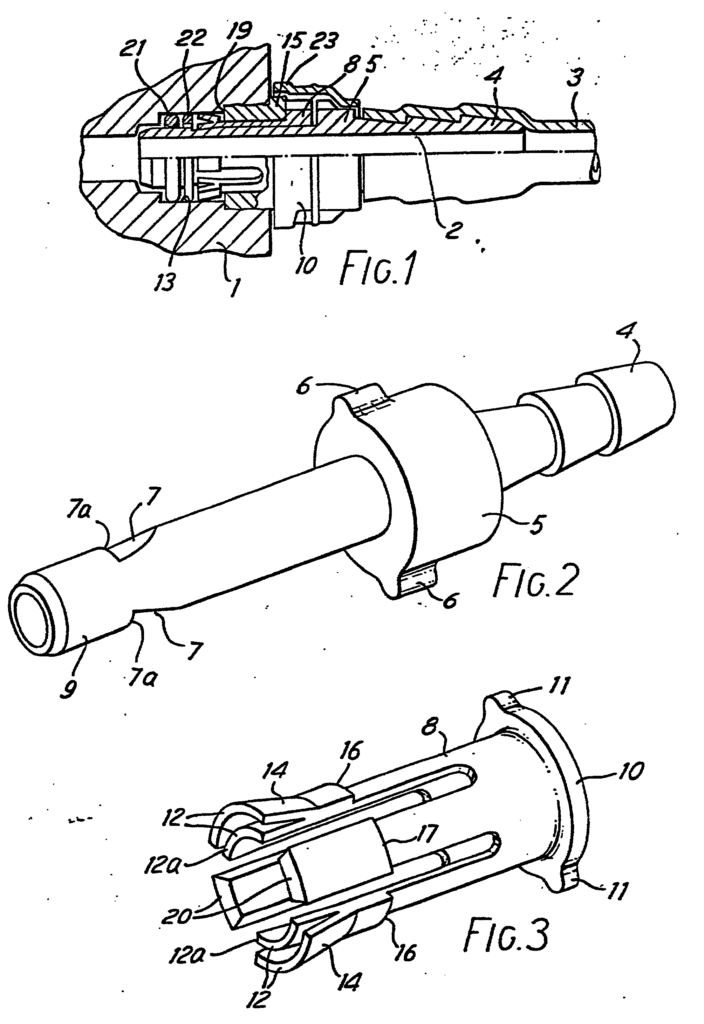

Referring to the drawing the assembly illustrated is intended for use in providing a piped compressed air connection to a control valve or other compressed air component of a vehicle compressed air brake system. The compressed air component comprises a first part 1 to which a compressed air connection is required to be made with a second generally tubular part 2. The second part 2 shown also in Fig. 2 has an internal diameter which is substantially the same as a nylon pipe 3 pressed tightly over a barbed or otherwise annularly ridged outer end 4. An intermediate flange portion 5 of somewhat larger diameter is provided with diametrically opposite positioned locating tongues 6 and the inner end is provided with notches 7 shaped to cooperate with radially inwardly effective abutments 12a of the rotatable insert 8. As will be seen these features provide opposing engageable abutments acting in a sense to prevent withdrawal of the second part 2 from the aperture.

The rotatable insert 8 is a resilient plastics moulding which is generally tubular to slidingly accept the inner end 9 of the tubular second part 2. An outer flange 10 of the insert 8 (as clearly shown in Fig. 3) is of the same external diameter and circumferential shape as flange portion 5 in that it has correspondingly diametrically located tongues 11. The inner end of the insert 8 is divided by axial slots into four resilient portions one diametric pair having biforked ends 12 being such as to resiliently rest as shown in Fig. 1 between notches 7 and the inner surface 13 of the aperture. The inner end surfaces 12a of biforked ends 12 thereby provide axially inwardly facing abutment surfaces engageable with axially outward facing abutment surfaces 7a presented by notches 7. The first part 1 includes retaining means in the form of a pressed-in flanged bush 15 which pressents an inwardly facing annular abutment surface 19 for the outward facing abutment surfaces 16 of the ends 12 to prevent axial movement of the insert. The other diametral pair 20 of the portions serve as centralising pads for the second part and offer further abutments surfaces 17 engageable with abutment 19.

In putting the assembly together, the suppliers of the component 1 may insert an inner "O" ring 21 together with a retaining ring 22 before pressing in the retaining bush member 15. Owing to the resiliently moveable inner ends of the insert 8 this can then be snapped into place. Nylon connection pipes such as 3 can be provided with a sleeve 23 and the described second part 2. These are then ready for immediate push-in connection into the first part 1, the outer sleeve 23 being shaped to be finally slidingly positioned over flanges 5 and 10 with the tongues 6 and 11 aligned.

In the aligned position of tongues 6 and 11 the axially inwardly facing abutment surface ends 12a provide engagement with the axially outwardly facing abutment surfaces of notch ends 7a to prevent withdrawal of the inner or second part. For servicing, the outer sleeve 23 can be moved back along the pipe 3 to permit the insert 8 to be rotated through ninety degrees whereby parts of the ends 12 carrying abutments 12a ride out of the notches 7, thereby disengaging the effective abutments and permitting withdrawal of the second part.

## Claims

1. A pipe fitting assembly comprising a first part (1) having an aperture receiving a second part (2) for effecting a pipe connection therewith said first part having an insert (8) through which an inner end of the second part can pass said insert (8) having means (16) axially locating it in the aperture and also having first abutment means (12a) engageable with second abutment means (7a) of the second part in a sense to constrain the second part (2) against withdrawal thereof from the first part (1) and characterised by means operable by rotation of the insert (8) relative to the second part to disengage said abutment means (12a) and permit withdrawal of the second part (2) from the first part (1).

2. A pipe fitting assembly as claimed in claim 1, characterised by locating means (23) for locating said insert (8) in a predetermined angular position about its axis relative to the second part (2).

3. A pipe fitting assembly as claimed in claim 2, characterised by said locating means (23) comprising a sleeve (23) which axially slidingly fits over aligned circumferential shapes (6, 11) of the insert (8) and the second part (2).

4. A pipe fitting assembly as claimed in claim 1, 2 or 3 characterised by said first part including an annular abutment (19) against which further abutment means (16) of the insert are engageable.

5. A pipe fitting assembly as claimed in claim 4 characterised by said annular abutment (19) being provided by a bush (15) inserted in the aperture of the first part (1).

6. A pipe fitting assembly as claimed in claim 4 or 5 characterised by said further abutment means (16) of the insert (8) comprising abutment elements (12) which are resiliently deflectable to permit insertion thereof into the first part (1).

7. A pipe fitting assembly as claimed in any preceding claim characterised by the second abutment means of the second part being provided by at least one notch (7) and said first abutment means (12a) carried by said insert (8) to be engageable with an axially outward facing abutment surface (7a) provided by said notch.

8. A pipe fitting assembly a claimed in any preceding claim characterised by the second abutment means of the second part being provided by a pair of diametrically opposed notches (7) respective ends (7a) of which abut axially with respective resiliently radially inwardly urged abutments (12a) carried by said insert (8).

## Patentansprüche

1. Zusammenbau von Rohrarmaturen, umfassend einen ersten Teil (1), der eine Öffnung hat, die einen zweiten Teil (2) aufnimmt, um eine Rohrverbindung damit zu bilden, wobei der erste Teil einen Einsatz (8) hat, durch den ein inneres Ende des zweiten Teiles hindurchgehen kann, wobei der Einsatz (8) Mittel (16), die ihn in der Öffnung axial anordnen, und weiterhin erste Widerlagermittel (12a) aufweist, die mit zweiten Widerlagermitteln (7a) des zweiten Teiles in Eingriff bringbar sind in einem Sinn, den zweiten Teil (2) gegen Zurückziehen aus dem ersten Teil (1) zu sichern, gekennzeichnet durch Mittel, die durch Drehung des Einsatzes (8) relativ zu dem zweiten Teil betätigbar sind, um die Widerlagermittel (12a) außer Eingriff zu bringen und Herausziehen des zweiten Teiles (2) aus dem ersten Teil (1) zu ermöglichen.

2. Zusammenbau von Rohrarmaturen nach Anspruch 1, gekennzeichnet durch Anordnungsmittel (23), um den Einsatz (8) in einer vorbestimmten Winkelposition um seine Achse relativ zu dem zweiten Teil (2) anzuordnen.

3. Zusammen von Rohrarmaturen nach Anspruch 2, dadurch gekennzeichnet, daß die Anordnungsmittel (23) eine Hülse (23) aufweisen, die axial gleitend über ausgerichtete Umfangsprofile (6, 11) des Einsatzes (8) und des zweiten Teils (2) paßt.

4. Zusammenbau von Rohrarmaturen nach Anspruch 1, 2 oder 3, dadurch gekennzeichnet, daß der erste Teil ein ringförmiges Widerlager (19) umfaßt, mit welchem weitere Widerlagermittel (16) des Einsatzes in Eingriff bringbar sind.

5. Zusammenbau von Rohrarmaturen nach Anspruch 4, dadurch gekennzeichnet, daß das ringförmige Widerlager (19) durch eine Buchse (15) geschaffen ist, die in die Öffnung des ersten Teils (1) eingesetzt ist.

6. Zusammenbau von Rohrarmaturen nach Anspruch 4 oder 5, dadurch gekennzeichnet, daß die weiteren Widerlagermittel (16) des Einsatzes (8) Widerlagerelemente (12) umfassen, die federnd ablenkbar sind, um ihr Einsetzen in den ersten Teil (1) zu ermöglichen.

7. Zusammenbau von Rohrarmaturen nach irgendeinem der vorhergehenden Ansprüche, dadurch gekennzeichnet, daß die zweiten Widerlagermittel des zweiten Teiles durch wenigstens eine Nut (7) geschaffen sind, und daß die ersten Widerlagermittel (12a), die von dem Einsatz (8) getragen sind, mit einer axial nach außen gewandten Widerlagerfläche (7a) in Eingriff bringbar sind, die durch die Nut geschaffen ist.

8. Zusammenbau von Rohrarmaturen nach irgendeinem der vorhergehenden Ansprüche, dadurch gekennzeichnet, daß die zweiten Widerlagermittel des zweiten Teiles durch ein Paar von diametral gegenüberliegenden Nuten (7) geschaffen sind, von denen betreffende Enden (7a) axial an betreffenden federnd radial einwärts gedrückten Widerlagern (12a) anliegen, die von dem Einsatz (8) getragen sind.

## Revendications

1. Un assemblage de raccordement pour tuyaux, comportant un premier élément (1) présentant une ouverture recevant un second élément (2) pour réaliser une connexion de tuyaux entre eux, ledit premier élément étant pourvu d'un insert (8) à travers lequel une extrémité interne du second élément peut passer, ledit insert (8) présentant des moyens le positionnant axialement dans l'ouverture et également des premiers moyens de butée (12a) susceptibles de s'engager avec des seconds moyens de butée (7a) du second élément de façon à empêcher le second élément (2) de se dégager du premier élément (1), et caractérisé par des moyens susceptibles d'être actionnés par rotation de l'insert (8) par rapport au second élément pour dégager lesdits moyens de butée (12a) et permettre de retirer le second élément (2) du premier élément (1).

2. Un assemblage de raccordement pour tuyaux tel que revendiqué dans la revendication 1, caractérisé par des moyens de positionnement (23) pour positionner ledit insert (8) dans une position angulaire prédéterminée autour de son axe par rapport au second élément (2).

3. Un assemblage de raccordement pour tuyaux tel que revendiqué dans la revendication 2, caractérisé en ce que lesdits moyens de positionnement (23) comportent un manchon (23) qui s'adapte axialement à glissement sur des formes périphériquement alignées (6, 11) de l'insert (8) et du second élément (2).

4. Un assemblage de raccordement pour tuyaux tel que revendiqué dans la revendication 1, 2 ou 3, caractérisé en ce que ledit premier élément comporte une butée annulaire (19) contre laquelle sont susceptibles de venir s'engager des premiers moyens de butée (16) de l'insert.

5. Un assemblage de raccordement pour tuyaux tel que revendiqué dans la revendication 4, caractérisé en ce que ladite butée annulaire (19) est fournie par une douille (15) insérée dans l'ouverture du premier élément (1).

6. Un assemblage de raccordement pour tuyaux tel que revendication dans la revendication 4 ou 5, caractérisé en ce que lesdits autres moyens de butée (16) de l'insert (8) comportent des éléments de butée (12) qui sont susceptibles d'être défléchis élastiquement afin de permettre leur insertion dans le premier élément (1).

7. Un assemblage de raccordement pour tuyaux tel que revendiqué dans l'une quelconque des revendications précédentes, caractérisé en ce que les seconds moyens de butée du second élément sont pourvus d'au moins une encoche (7) et que lesdits premiers moyens de butée (12a) portés par ledit insert (8) sont susceptibles de s'engager avec une surface de butée (7a) regardant axialement vers l'extérieur formée par ladite encoche.

8. Un assemblage de raccordement pour tuyaux tel que revendiqué dans l'une quelconque des revendications précédentes, caractérisé en ce que les seconds moyens de butée du second élément sont pourvus d'une paire d'encoches diamétriquement opposées (7) dont les extrémités respectives (7a) viennent axialement en butée contre les butées respectives sollicitées élastiquement radialement vers l'intérieur (12a) portées par ledit insert (8).

FIG.1

FIG.2

FIG.3